(19) Europäisches Patentamt
European Patent Office
Office européen des brevets

(11) **EP 3 028 546 B1**

(12) **EUROPÄISCHE PATENTSCHRIFT**

(45) Veröffentlichungstag und Bekanntmachung des Hinweises auf die Patenterteilung:
**25.07.2018 Patentblatt 2018/30**

(21) Anmeldenummer: **14759182.0**

(22) Anmeldetag: **04.09.2014**

(51) Int Cl.:
*H05B 33/08* (2006.01)        *H05B 37/02* (2006.01)
*B61L 5/18* (2006.01)

(86) Internationale Anmeldenummer:
**PCT/EP2014/068850**

(87) Internationale Veröffentlichungsnummer:
**WO 2015/039879 (26.03.2015 Gazette 2015/12)**

(54) **VERFAHREN ZUM EINSTELLEN EINES LED-SIGNALGEBERS HINSICHTLICH TAG- UND NACHTBETRIEB UND LED-SIGNALGEBER**

METHOD FOR SETTING AN LED SIGNAL TRANSMITTER IN TERMS OF DAY AND NIGHT MODE, AND LED SIGNAL TRANSMITTER

PROCÉDÉ PERMETTANT DE RÉGLER UN ÉMETTEUR DE SIGNAUX À DIODES ÉLECTROLUMINESCENTES EN FONCTIONNEMENT JOUR ET NUIT ET ÉMETTEUR DE SIGNAUX À DIODES ÉLECTROLUMINESCENTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.09.2013 DE 102013218998**

(43) Veröffentlichungstag der Anmeldung:
**08.06.2016 Patentblatt 2016/23**

(73) Patentinhaber: **Siemens Aktiengesellschaft 80333 München (DE)**

(72) Erfinder: **ERET, Claus 31185 Bettrum (DE)**

(56) Entgegenhaltungen:
**EP-A1- 2 463 174      EP-A2- 1 722 608
EP-A2- 2 131 628      DE-A1-102008 029 725**

**Beschreibung**

Die Erfindung betrifft ein Verfahren zum Einstellen eines an ein Stellwerk angeschlossenen LED-Signalgebers hinsichtlich Tag- und Nachtbetrieb.

Ein derartiges Verfahren ist der deutschen Offenlegungsschrift DE 10 2008 029 725 A1 entnehmbar. Bei diesem bekannten Verfahren wird von einem Stellwerk elektrische Energie zur Lichterzeugung zu dem LED-Signalgeber übertragen. Im LED-Signalgeber ist ein LED-Treiber vorhanden, dem die elektrische Energie zugeführt wird. Dieser Treiber ist ferner mit einem vom Stellwerk vorgegebenen Eingangssignal bezüglich einer Tag-/Nachtinformation beaufschlagt. Von dem LED-Treiber wird die Bestromung der LED-Lichtquelle gesteuert, wobei das Verhalten der LED-Lichtquelle von einer Messwerterfassungseinrichtung überwacht wird. Ein entsprechendes Ausgangssignal der Messwerterfassungseinrichtung wird einem Vergleicher zugeführt, an dem auch das von dem Stellwerk gelieferte Eingangssignal bezüglich der Tag-/Nachtinformation anliegt. Bei Nichtübereinstimmung der mit der Messwerterfassungseinrichtung gemessenen Ist-Betriebsart mit der durch die Tag-/Nacht-information vorgegebenen Soll-Betriebsart wird ein Abschalter im Strompfad des LED-Treibers aktiviert.

Der Erfindung liegt die Aufgabe zu Grunde, ein Verfahren zum Einstellen eines an ein Stellwerk angeschlossenen LED-Signalgebers hinsichtlich Tag- und Nachtbetrieb vorzuschlagen, das sich mit vergleichsweise geringem Aufwand durchführen lässt.

Zur Lösung dieser Aufgabe werden erfindungsgemäß mindestens einmal der Eingangsstrom durch den LED-Signalgeber und die Eingangsspannung an dem LED-Signalgeber verändert und aus den verschiedenen Eingangsstrom- und Eingangsspannungswerten der wirksame Vorwiderstand des LED-Signalgebers ermittelt; mit dem wirksamen Vorwiderstand und den verschiedenen Eingangsstrom- und Eingangsspannungswerten wird eine Quellspannung errechnet und in Abhängigkeit von der Größe der Quellspannung ein einen Tagbetrieb oder einen Nachtbetrieb kennzeichnendes Ausgangssignal bereit gestellt. Diese Quellspannung dient also als Steuergröße für die Helligkeit des LED-Signalgebers.

Ein wesentlicher Vorteil des erfindungsgemäßen Verfahrens besteht darin, dass bei ihm auf die Übertragung von besonderen Informationen zum Tag- bzw. Nachtbetrieb vom Stellwerk zum LED-Signalgeber verzichtet werden kann, weil die Umschaltung der Betriebsspannungsquelle von einer relativ hohen Tagspannung auf eine relativ niedrige Nachtspannung mittels des erfindungsgemäßen Verfahrens aus den Strom- und Spannungsverhältnissen am Eingang des Signalgebers ermittelt wird, wobei das erfindungsgemäße Verfahren zusätzlich insofern besonders vorteilhaft ist, als es unabhängig von der Kürze bzw. Länge der Leitung arbeitet, über die der LED-Signalgeber an das Stellwerk angeschlossen ist; auch Störeinflüsse durch schwankende Ströme, Temperaturänderungen, Kontaktübergangswiderstände und Toleranzen etwaig eingesetzter Transformatoren können durch das erfindungsgemäße Verfahren ausgeglichen werden.

Die Gewinnung der verschiedenen Eingangsstrom- und Eingangsspannungswerte kann bei dem erfindungsgemäßen Verfahren in unterschiedlicher Weise erfolgen. Bei einer im Hinblick auf den Aufwand besonders vorteilhaften Ausführungsform des erfindungsgemäßen Verfahrens werden an den Eingängen des LED-Signalgebers ein erster Eingangsstromwert und ein erster Eingangsspannungswert gemessen und gespeichert, danach wird ein Schaltkontakt in einer parallel zum LED-Signalgeber liegenden Reihenschaltung mit einem Ergänzungswiderstand vorübergehend geschlossen, und es werden ein zweiter Eingangsstromwert und ein zweiter Eingangsspannungswert gemessen und gespeichert; die Quellspannung wird ermittelt, indem zu dem ersten Eingangsspannungsmesswert ein Produkt aus dem ersten Eingangsstrommesswert und einem Quotienten aus einem Spannungsdifferenzwert und einem Stromdifferenzwert addiert wird, wobei der Spannungsdifferenzwert der Differenz zwischen erstem und zweitem Eingangsspannungsmesswert und der Stromdifferenzwert der Differenz zwischen zweitem und erstem Eingangsstrommesswert entspricht.

In Abhängigkeit von der jeweiligen Ausgestaltung des LED-Signalgebers hinsichtlich seiner LED-Lichtquellen kann das Tag- bzw. Nachtsignal in unterschiedlicher Weise verarbeitet werden. Als besonders vorteilhaft wird es angesehen, wenn mit dem Ausgangssignal eine Treiberanordnung für die LED-Lichtquellen des LED-Signalgebers beaufschlagt wird.

Der Erfindung liegt ferner die Aufgabe zu Grunde, einen an ein Stellwerk angeschlossenen LED-Signalgeber mit Tag- und Nachtbetrieb, wie er in der oben behandelten deutschen Offenlegungsschrift beschrieben ist, so auszugestalten, dass er mit vergleichsweise geringem schaltungstechnischen Aufwand auskommt und sich dabei durch besondere Zuverlässigkeit im Einstellen von Tag- und Nachtbetrieb auszeichnet.

Zur Lösung dieser Aufgabe ist erfindungsgemäß an den Eingang des LED-Signalgebers eine Mess- und Steuereinrichtung angeschlossen, die mindestens einmal den Eingangsstrom durch den LED-Signalgeber und die Eingangsspannung an dem LED-Signalgeber verändert und aus den verschiedenen Eingangsstrom- und Eingangsspannungswerten den wirksamen Vorwiderstand des LED-Signalgebers ermittelt sowie mit dem wirksamen Vorwiderstand und den verschiedenen Eingangsstrom- und Eingangsspannungswerten eine Quellspannung errechnet und in Abhängigkeit von der Größe der Quellspannung ein einen Tagbetrieb oder einen Nachtbetrieb kennzeichnendes Ausgangssignal bereit stellt.

Hinsichtlich dieser Ausgestaltung des erfindungsgemäßen LED-Signalgebers ergeben sich sinngemäß die gleichen Vorteile, wie sie oben bereits im Zusammenhang mit dem erfindungsgemäßen Verfahren aufgeführt sind.

Besonders kostengünstig lässt sich der erfindungsgemäße LED-Signalgeber ausführen, wenn die Mess- und Steuereinrichtung derart ausgebildet ist, dass ein erster Eingangsstromwert und ein erster Eingangsspannungswert mess- und speicherbar sind, zum Messen und Speichern eines zweiten Eingangsstromwertes und eines zweiten Eingangsspannungswertes ein parallel zum LED-Signalgeber in einer Reihenschaltung mit einem Ergänzungswiderstand liegender Schaltkontakt öffnenbar ist und zum Errechnen der Quellspannung zu dem ersten Eingangsspannungsmesswert ein Produkt aus dem ersten Eingangsstrommesswert und einem Quotienten aus einem Spannungsdifferenzwert und einem Stromdifferenzwert addiert wird, wobei der Spannungsdifferenzwert der Differenz zwischen erstem und zweitem Eingangsspannungsmesswert und der Stromdifferenzwert der Differenz zwischen erstem und zweitem Eingangsstrommesswert entspricht.

Hierbei ist es vorteilhaft, an die Mess- und Steuereinrichtung eine Treiberanordnung für die LED-Lichtquellen des LED-Lichtsignalgebers anzuschließen, um auf relativ einfache Weise den Strom durch die LED-Lichtquellen so zu steuern, wie es für den Tag- bzw. den Nacht-Betrieb erforderlich ist.

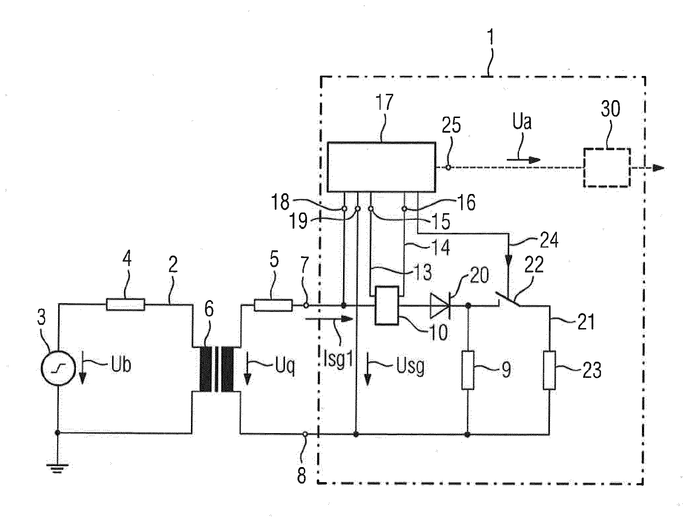

Zur weiteren Erläuterung der Erfindung ist in der Figur ein Ausführungsbeispiel eines erfindungsgemäßen Signalgebers dargestellt.

Gemäß der Figur ist ein LED-Signalgeber 1 über eine Zweidrahtleitung 2 an ein Stellglied 3 eines weiter nicht gezeigten Stellwerks angeschlossen. Widerstände 4 und 5 in der Darstellung geben jeweils den Leitungswiderstand von dem Stellglied bis zu einem Transformator 6 bzw. von diesem bis zu Eingängen 7 und 8 des LED-Signalgebers 1 wieder. Auf den Transformator 6 kann ggf. auch verzichtet werden.

Der LED-Signalgeber 1 ist in der Figur durch seinen Innenwiderstand 9 verkörpert, wobei der Innenwiderstand 9 den Innenwiderstand der - nicht gezeigten - LED-Lichtquellen und ihrer Beschaltung des LED-Signalgebers 1 verkörpert. Dem Eingang 7 vorgeordnet liegt ein nur schematisch dargestellter Stromsensor 10, der ausgangsseitig über Leitungen 13 und 14 mit Anschlüssen 15 und 16 einer Mess- und Steuereinrichtung 17 verbunden ist. Die Mess- und Steuereinrichtung 17 weist weitere Eingänge 18 und 19 auf, mit der eine Spannung Usg an den Eingängen 7 und 8 des LED-Signalgebers 1 erfasst werden kann; diese Spannung wird in der Mess- und Steuereinrichtung 17 gespeichert. Außerdem ist dem Eingang 7 ein Gleichrichter 20 nachgeordnet.

Parallel zu dem Innenwiderstand 9 des LED-Signalgebers 1 bzw. zum LED-Signalgeber 1 ist eine Reihenschaltung 21 angeordnet, die aus einem Schaltkontakt 22 in Reihe mit einem Ergänzungswiderstand 23 besteht. Nur schematisch ist in der Figur durch eine Verbindungsleitung 24 angedeutet, dass der Schaltkontakt 22 von der Mess- und Steuereinrichtung 17 aus geschlossen und geöffnet werden kann.

Der Mess- und Steuereinrichtung 17 stellt ein einen Tagbetrieb oder einen Nachtbetrieb kennzeichnendes Ausgangssignal Ua bereit.

An dem Ausgang 25 der Mess- und Steuereinrichtung 17 ist eine hier nur strichliert dargestellte Treiberanordnung 30 mit nachgeordneten LED-Lichtquellen angeschlossen. Der Baustein 30 ist hier nur strichliert dargestellt, weil er - wie die LED-Lichtquellen - Bestandteil des durch den Innenwiderstand 9 verkörperten LED-Signalgebers 1 ist.

Hervorzuheben ist, dass die oben angesprochenen Bausteine 10, 17, 22, 23 und 30 integrale Bestandteile des LED-Signalgeber 1 sein können.

Das erfindungsgemäße Verfahren arbeitet in folgender Weise: Wird im Tagbetrieb eine Betriebsspannung Ub mit einem Spannungswert Ub1 von dem Stellglied 3 über den Transformator 6 zur Verfügung gestellt, dann ergibt sich an den Eingängen 7 und 8 des LED-Signalgebers 1 eine Eingangsspannung Usg mit einem ersten Eingangsspannungswert Usg1. Im Falle einer Betriebsspannung Ub mit einem Spannungswert Ub1 = 180 Volt im Tagbetrieb beträgt der erste Eingangsspannungswert 7,28 Volt, wenn mit einem Widerstandswert R1 = 200 Ω für den Widerstand 4 und einem Leitungswiderstandswert R2 für den Widerstand 5 in der Größenordnung von 3 Ω und einem Innenwiderstand 9 mit dem Widerstandswert 6 Ohm ausgegangen wird. Ein Eingangsstrom Isg über den Eingang 7 des LED-Signalgebers 1 hat dann einen ersten Eingangsstromwert Isg1 = 1,21 A. Diese Werte für Usg1 und Isg1 ergeben sich für den Fall, dass der Schaltkontakt 22 geöffnet ist, wie es in der Figur dargestellt ist. Der erste Eingangsstromwert Isg1 und der erste Eingangsspannungswert Usg1 werden von der Mess- und Steuereinrichtung 17 erfasst und gespeichert.

Nach Erfassung des ersten Eingangsspannungswertes Usg1 und des ersten Eingangsstromwertes Isg1 wird der Stromfluss durch den LED-Signalgeber 1 verändert, indem bei dem hier dargestellten Ausführungsbeispiel von der Mess-und Steuereinrichtung 17 der Schaltkontakt 22 vorübergehend geschlossen und damit zu dem Innenwiderstand 9 des LED-Signalgebers 1 der Ergänzungswiderstand 23 parallel geschaltet wird. Dies führt zu einer Erhöhung des Eingangsstromes Isg auf einen zweiten Eingangsstromwert Isg2 = 1,52 A. Die Eingangsspannung Usg an den Eingängen 7 und 8 Eingang des LED-Signalgebers 1 sinkt daraufhin ab und nimmt einen zweiten Eingangsspannungswert Usg2 = 6,08 Volt an, wie auch der nachstehenden Tabelle zu entnehmen ist. Dabei ist davon ausgegangen, dass der Ergänzungswiderstand einen Wert von 12 Ω hat.

Damit lässt sich ein wirksamer Vorwiderstand Rv für den LED-Signalgeber 1 gemäß nachstehender Gleichung (1) errechnen:

$$R_V = \frac{\Delta U}{\Delta I} = \frac{U_{sg1} - U_{sg2}}{I_{sg2} - I_{sg1}} \qquad (1)$$

Ebenso lässt sich eine Quellspannung Uq gemäß folgender Beziehung (2) errechnen.

$$U_q = U_{sg1} + R_v \cdot I_{sg1} = U_{sg1} + \frac{U_{sg1} - U_{sg2}}{I_{sg2} - I_{sg1}} \cdot I_{sg1} \qquad (2)$$

Die nachstehende Tabelle zeigt, dass sich für den Tag-Betrieb bei langer Leitung eine Quellspannung Uq = 11,96 V ergibt; im Nacht-Betrieb bei wiederum langer Leitung ergibt sich eine Quellspannung Uq von 8,05 Volt. Ähnlich sehen die Werte für die Quellspannung Uq bei einer kurzen Leitung für den Tag- und den Nachtbetrieb aus. Mit der berechneten Quellspannung Uq ist somit eine sichere Entscheidungsgrundlage für den Tag- bzw. Nachtbetrieb gegeben, in dem man den Bezugswert Ubz zwischen Tag- und Nachtspannung auf 10 V festlegt.

| Umgebungsbedingungen | | | | | Vom Signalgeber gemessen | | berechnet | |
|---|---|---|---|---|---|---|---|---|
| Tag/Nacht | Leitung | Ub [V] | R1 [Ω] | R2 [Ω] | Usg [V] | Isg [A] | Uq [V] | Betriebsart |
| Tag | lang | 180 | 200 | 3 | 7,28 | 1,21 | | Normal |
| Tag | lang | 180 | 200 | 3 | 6,08 | 1,52 | 11,96 | Stromerhöhung |
| Nacht | lang | 120 | 200 | 3 | 4,85 | 0,81 | | Normal |
| Nacht | lang | 120 | 200 | 3 | 4,06 | 1,01 | 8,05 | Stromerhöhung |
| Tag | kurz | 180 | 10 | 1 | 10,2 2 | 1,7 | | Normal |
| Tag | kurz | 180 | 10 | 1 | 9,52 | 2,38 | 11,97 | Stromerhöhung |
| Nacht | kurz | 120 | 10 | 1 | 6,81 | 1,14 | | Normal |
| Nacht | kurz | 120 | 10 | 1 | 6,34 | 1,59 | 8,00 | Stromerhöhung |
| Tag | - | 180 | - | - | 12 | - | | Leerlauf |
| Nacht | - | 120 | - | - | 8 | - | | Leerlauf |

Es ist somit möglich, beim Einsatz eines LED-Signalgebers sowohl bei einer langen Leitung zwischen dem LED-Signalgeber und dem Stellglied eines Stellwerks und auch bei einer kurzen Leitung für diese Verbindung sicher zwischen Tag- und Nachtbetrieb zu unterscheiden, ohne dass es dazu der Übertragung einer besonderen Tag- oder Nacht-Information bedarf.

## Patentansprüche

1. Verfahren zum Einstellen eines an ein Stellwerk angeschlossen LED-Signalgebers (1) hinsichtlich Tag- und Nachtbetrieb,
dadurch gekennzeichnet, dass mindestens einmal der Eingangsstrom (Isg) durch den LED-Signalgeber (1) und die Eingangsspannung (Usg) an dem LED-Signalgeber (1) verändert werden und aus den verschiedenen Eingangsstrom- und Eingangsspannungswerten der wirksame Vorwiderstand des LED-Signalgebers (1) ermittelt wird,
mit dem wirksamen Vorwiderstand und den verschiedenen Eingangsstrom- und Eingangsspannungswerten eine Quellspannung (Uq) errechnet wird,
und in Abhängigkeit von der Größe der Quellspannung (Uq) ein einen Tagbetrieb oder einen Nachtbetrieb kennzeichnendes Ausgangssignal (Ua) bereit gestellt wird.

2. Verfahren nach Anspruch 1,
dadurch gekennzeichnet, dass

an den Eingängen (7,8) des LED-Signalgebers (1) ein erster Eingangsstromwert und ein erster Eingangsspannungswert gemessen und gespeichert werden,

danach der Stromfluss durch den LED-Signalgeber (1) verändert wird und ein zweiter Eingangsstromwert und ein zweiter Eingangsspannungswert gemessen und gespeichert werden,

die Quellspannung (Uq) ermittelt wird, indem zu dem ersten Eingangsspannungsmesswert ein Produkt aus dem ersten Eingangsstrommesswert und einem Quotienten aus einem Spannungsdifferenzwert und einem Stromdifferenzwert addiert wird, wobei der Spannungsdifferenzwert der Differenz zwischen erstem und zweitem Eingangsspannungsmesswert und der Stromdifferenzwert der Differenz zwischen erstem und zweiten Eingangsstrommesswert entspricht.

3.  Verfahren nach Anspruch 1 oder 2,
    **dadurch gekennzeichnet, dass**
    mit dem Ausgangssignal (Ua) eine Treiberanordnung (30) für die LED-Lichtquellen (30) des LED-Signalgebers (1) beaufschlagt wird.

4.  Ein an ein Stellwerk anschließbarer LED-Signalgeber (1) mit Tag- und Nachtbetrieb,
    **dadurch gekennzeichnet, dass**
    an den Eingängen (7,8) des LED-Signalgebers (1) eine Mess-und Steuereinrichtung (17) angeschlossen ist,
    die mindestens einmal den Eingangsstrom durch den LED-Signalgeber (1) und die Eingangsspannung an dem LED-Signalgeber (1) verändert und aus den verschiedenen Eingangsstrom- und Eingangsspannungswerten den wirksamen Vorwiderstand des LED-Signalgebers (1) ermittelt,
    mit dem wirksamen Vorwiderstand und den verschiedenen Eingangsstrom- und Eingangsspannungswerten eine Quellspannung (Uq) errechnet und
    in Abhängigkeit von der Größe der Quellspannung (Uq) ein einen Tagbetrieb oder einen Nachtbetrieb kennzeichnendes Ausgangssignal (Ua) bereit stellt.

5.  LED-Signalgeber nach Anspruch 4,
    **dadurch gekennzeichnet, dass**
    die Mess- und Steuereinrichtung (17) derart ausgebildet ist, dass ein erster Eingangsstromwert und ein erster Eingangsspannungswert mess- und speicherbar sind,
    zum Messen und Speichern eines zweiten Eingangsstromwertes und eines zweiten Eingangsspannungswertes der Stromfluss durch den LED-Signalgeber (1) veränderbar ist, zum Errechnen der Quellspannung (Uq) zu dem ersten Eingangsspannungsmesswert ein Produkt aus dem ersten Eingangsstrommesswert und einem Quotienten aus einem Spannungsdifferenzwert und einem Stromdifferenzwert addiert wird, wobei der Spannungsdifferenzwert der Differenz zwischen erstem und zweitem Eingangsspannungsmesswert und der Stromdifferenzwert der Differenz zwischen zweitem und ersten Eingangsstrommesswert entspricht.

6.  LED-signalgeber nach Anspruch 5,
    **dadurch gekennzeichnet, dass**
    an die Mess- und Steuereinrichtung (17) eine Treiberanordnung (30) für die LED-Lichtquellen (31) des LED-Signalgebers (1) angeschlossen ist.

**Claims**

1.  Method for setting an LED signal transmitter (1), connected to a signal box, in terms of day and night mode,
    **characterised in that**
    the input current (Isg) through the LED signal transmitter (1) and the input voltage (Usg) at the LED signal transmitter (1) is changed at least once and the effective series resistance of the LED signal transmitter (1) is determined from the various input current and output voltage values,
    with the effective series resistance and the various input current and input voltage values, a source voltage (Uq) is calculated,
    and an output signal (Ua) identifying a day mode or a night mode is provided as a function of the size of the source voltage (Uq).

2.  Method according to claim 1,
    **characterised in that**
    a first input current value and a first input voltage value are measured and stored at the inputs (7, 8) of the LED signal transmitter (1),
then the current flow through the LED signal transmitter (1) is changed and a second input current value and a second input voltage value are measured and stored,
the source voltage (Uq) is determined, by a product from the first input current measured value and a quotient from a voltage difference value and a current difference value being added up to form the first input voltage measured value, wherein the voltage difference value corresponds to the difference between the first and second input voltage measured value and the current difference value corresponds to the difference between the first and second input current measured value.

3. Method according to claim 1 or 2,
**characterised in that**
a driver arrangement (30) for the LED light sources (30) of the LED signal transmitter (1) is applied with the output signal (Ua).

4. LED signal transmitter (1), which can be connected to a signal box, having day and night mode,
**characterised in that**
a measuring and control facility (17) is connected to the inputs (7, 8) of the LED signal transmitter (1),
and changes the input current through the LED signal transmitter (1) and the input voltage on the LED signal transmitter (1) at least once and determines the effective series resistance of the LED signal transmitter (1) from the various input current and input voltage values,
calculates a source voltage (Uq) with the effective series resistance and the various input current and input voltage values and
provides an output signal (Ua) identifying a day mode or a night mode as a function of the size of the source voltage (Uq) .

5. LED signal transmitter according to claim 4,
**characterised in that**
the measuring and control facility (17) is embodied such that a first input current value and a first input voltage value can be measured and stored,
the current flow through the LED signal transmitter (1) can be changed in order to measure and store a second input current value and a second input voltage value,
a product from the first input current measured value and a quotient from a voltage difference value and a current difference value is added to form the first input voltage measured value in order to calculate the source voltage (Uq), wherein the voltage difference value corresponds to the difference between the first and second input voltage measured value and the current difference value corresponds to the difference between second and first input current measured value.

6. LED signal transmitter according to claim 5,
**characterised in that**
a driver arrangement (30) for the LED light sources (31) of the LED signal transmitter (1) is connected to the measuring and control facility (17).

**Revendications**

1. Procédé de réglage d'un émetteur (1) de signaux DEL raccordé à un poste de manoeuvre en ce qui concerne le fonctionnement de jour et de nuit,
**caractérisé en ce que**
on change au moins une fois le courant (Isg) d'entrée passant dans l'émetteur (1) de signal DEL et la tension (Usg) d'entrée aux bornes de l'émetteur (1) de signaux DEL et, à partir des diverses valeurs de courant d'entrée et de tension d'entrée, on détermine la résistance série efficace de l'émetteur (1) de signal DEL,
par la résistance série efficace et les diverses valeurs de courant d'entrée et de tension d'entrée, on calcule une tension (Uq) de source,
et, en fonction de la valeur de la tension (Uq) de source, on met à disposition un signal (Ua) de sortie caractérisant un fonctionnement de jour ou un fonctionnement de nuit.

2. Procédé suivant la revendication 1,
**caractérisé en ce que**

on mesure une première valeur du courant d'entrée et une première valeur de la tension d'entrée aux entrées (7, 8) de l'émetteur (1) de signaux DEL et on les mémorise,

on change ensuite le flux de courant passant dans l'émetteur (1) de signaux DEL et on mesure une deuxième valeur de courant d'entrée et une deuxième valeur de tension d'entrée et on les mémorise,

on détermine la tension (Uq) de source en ajoutant, à la première valeur de mesure de tension d'entrée, le produit de la première valeur de mesure du courant d'entrée par le quotient d'une valeur de différence de tension par une valeur de différence de courant, la valeur de différence de tension correspondant à la différence entre la première et la deuxième valeur de mesure de tension d'entrée et la valeur de différence de courant correspondant à la différence entre la première et la deuxième valeur de mesure de courant d'entrée.

3. Procédé suivant la revendication 1 ou 2,
   **caractérisé en ce que**
   l'on alimente, par le signal (Ua) de sortie, un système (30) d'attaque des sources (30) lumineuses DEL de l'émetteur (1) de signaux DEL.

4. Emetteur (1) de signaux DEL pouvant être raccordé à un poste de commande et ayant un fonctionnement de jour et un fonctionnement de nuit,
   **caractérisé en ce que**
   aux entrées (7, 8) de l'émetteur (1) de signaux DEL est raccordé un dispositif (17) de mesure et de commande,
   qui change, au moins une fois, le courant d'entrée passant dans l'émetteur (1) de signaux DEL et la tension d'entrée aux bornes de l'émetteur (1) de signaux DEL et, à partir des diverses valeurs de courant d'entrée et de tension d'entrée, détermine la résistance série efficace de l'émetteur (1) de signaux DEL,
   calcule, par la résistance série efficace et les diverses valeurs de courant d'entrée et de tension d'entrée, une tension (Uq) de source et
   en fonction de la valeur de la tension (Uq) de source, met à disposition un signal (Ua) de sortie caractérisant un fonctionnement de jour ou un fonctionnement de nuit.

5. Emetteur de signaux DEL suivant la revendication 4,
   **caractérisé en ce que**
   le dispositif (17) de mesure et de commande est constitué de manière
   à pouvoir mesurer et mémoriser une première valeur de courant d'entrée et une première valeur de tension d'entrée,
   à pouvoir, pour mesurer et mémoriser une deuxième valeur de courant d'entrée et une deuxième valeur de tension d'entrée, changer le flux de courant passant dans l'émetteur (1) de signaux DEL,
   pour le calcul de la tension (Uq) de source, il est ajouté, à la première valeur de mesure de tension d'entrée, le produit de la première valeur de mesure de courant d'entrée par le quotient d'une valeur de différence de tension par une valeur de différence de courant, la valeur de différence de tension correspondant à la différence entre la première et la deuxième valeur de mesure de tension d'entrée et la valeur de différence de courant correspondant à la différence entre la deuxième et la première valeur de mesure de courant d'entrée.

6. Emetteur de signaux DEL suivant la revendication 5,
   **caractérisé en ce qu'**
   au dispositif (17) de mesure de commande est raccordé un agencement (30) d'attaque des sources (31) lumineuses DEL de l'émetteur (1) de signaux DEL.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008029725 A1